# EUROPEAN PATENT SPECIFICATION

(11) **EP 2 543 808 B1**
(45) Date of publication and mention of the grant of the patent: **04.03.2020**
(21) Application number: 11172760.8
(22) Date of filing: 05.07.2011
(51) Int. Cl.: E05F 15/622

(54) **Actuator device for automatically activating the vehicle door of a motor vehicle**
Aktuatorvorrichtung zum automatischen Betätigen der Fahrzeugtür eines Kraftfahrzeugs
Dispositif d'actionneur pour l'activation automatique de la porte d'un véhicule motorisé

(43) Date of publication of application: 09.01.2013
(73) Proprietor: U-Shin Deutschland Zugangssysteme GmbH, 85253 Erdweg (DE)
(72) Inventor: Kummer, Frank, 86150 Augsburg (DE)
(74) Representative: Verriest, Philippe

(56) References cited:
- EP-A1- 1 940 012
- WO-A1-2005/092575
- GB-A- 1 593 971
- US-A1- 2002 104 267
- US-A1- 2008 061 643

## Description

The invention relates to an actuator device for automatically activating the vehicle door of a motor vehicle which comprises an arrangement of tubular housing parts which can be extended and retracted telescopically and has the external form of a gas-filled spring. Such an actuator device is known from US2008/0061643, which discloses the features of the preamble of claim 1.
For the telescopic retraction or extension, the actuator device contains for example a spindle drive and an electromotive drive which acts on the spindle drive. In this context, a vehicle door is understood in the following to be, inter alia, both the side doors and the tailgate or the boot lid of a vehicle.

A known actuator device of the generic type comprises a tube arrangement which can be extended and retracted telescopically and which is driven by means of a spindle drive located in the tube arrangement. In this context, the spindle drive is connected to an electromotive drive which causes a spindle extending in the axial direction to rotate, said spindle then pushing a spindle nut, located in a guide along the longitudinal axis of the spindle, from a pulled-back position of rest into an extended position.
In order to avoid undesired pivoting of the vehicle door when the electromotive drive is deactivated, but at the same time to be able to activate the vehicle manually with little application of force, the output shaft of the electromotive drive is operatively connected to a brake device.

One problem of these known actuator devices is the noise generated from the motor and the gearbox during functioning. In addition, this problem may be even enforced when transmitted via the housing and the spindle directly to the vehicle body or to the tailgate. When an actuator device of this type is fixed on the body of the vehicle or to the tailgate, the acoustically perceptible level which is already present due to other components of the vehicle rises further.
One of the major sources of noise has been identified to be the gearbox. Indeed, the conventionally used gearboxes are planetary gears. Even if these gearboxes are very efficient, the high number of tooth meshing together and correlated friction generates a high level of noise that is no more acceptable, in particular for cars in the luxury segment where such drive devices are often mounted.
One object of the present invention is to provide an actuator device having a lower level of noise, in particular noise produced by the gear of the electromotive drive to the body of the vehicle.
This object is achieved according to the invention by an actuator device according to claim 1.

Such a wobble mechanism is a specific gear that allows for example a speed reduction. It comprises a reduction part and a part to transform an oscillating rotational movement into a rotational movement. The reduction part comprises an oscillating and rotating toothed wheel supported eccentrically by a rotating shaft and meshing with a fixed and static toothed ring.
Thus the toothed wheel describes an oscillating movement at the rotational speed of the rotating shaft. If the toothed wheel has less teeth than the toothed ring, the rotation speed of the toothed wheel is reduced with respect to the rotational speed of the rotating shaft. The part to transform the oscillation and rotational movement of the toothed wheel only into a rotational movement may comprise an Oldham coupling.

In fact, such wobble mechanisms can have the same efficiency as known planetary gears while generating less noise because only few teeth of the toothed wheel and the toothed ring mesh together, therefore generating less friction and friction noise.

In addition, such a wobble mechanism may be very compact; therefore the diameter of the drive device may be equal or even fewer than conventionally known drive devices.

Further particularly advantageous refinements of the invention are disclosed by the dependent claims.

According to the invention, the wobble mechanism comprises an excenter shaft rotationally driven by the electrical motor and supporting an oscillating front wheel having outer teeth and a fixed planetary wheel having inner teeth meshing with the outer teeth of the front wheel, the front wheel having less teeth than the planetary wheel.

The front wheel is coupled to an output shaft disc via an Oldham coupling.
Such Oldham coupling may comprise an Oldham disc having first diametrically opposed recesses and second diametrically opposed second recesses, shifted by 90° with respect to said first recesses, said first recesses engage with two diametrical projections of said front wheel and said second recesses engage with projections carried by said output shaft disc.

Furthermore said excenter shaft supports rotationally the front wheel, the Oldham disc and the output shaft disc.

Said excenter shaft additionally carries an excenter mass for compensation of vibrations generated by the oscillating front wheel. According to another aspect, the gearbox comprises a gear box pipe in which the planetary wheel is fixed.

Moreover the actuator device further comprises a brake device located between the electrical motor and the gearbox, for example a permanent-magnet-excited hysteresis brake.
Finally, the gearbox and the brake device may be assembled in said gear box pipe.
Further details and advantages of the invention emerge from the following exemplary embodiments explained with reference to figures, in which:
Figure 1 is a schematic perspective view of the rear region of a motor vehicle with the tailgate opened and laterally arranged actuator device according to the invention;
Figure 2 shows partially the actuator device of figure 1 in an explosion view;
Figure 3 shows more in detail a longitudinal section through the actuator device of figure 1:
Figure 4 shows a longitudinal section through the gearbox excenter shaft shown in figures 2 and 3.

In all figures, the same reference numbers designate the same elements.

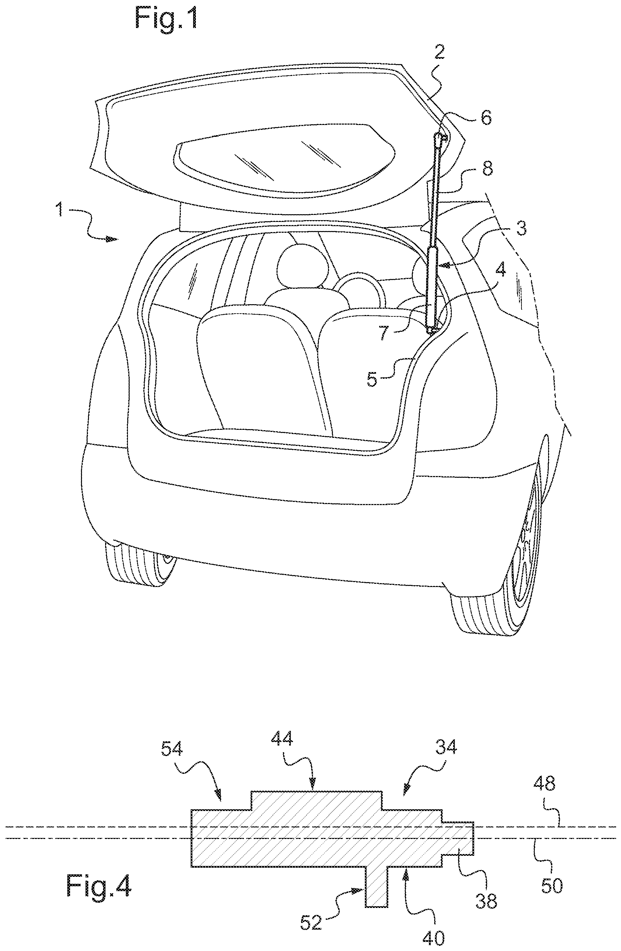

In Figure 1, the numeral 1 designates a motor vehicle which has a tailgate 2 which can be pivoted by an actuator device 3 from a closed position into the opened position illustrated in Figure 1, and if appropriate in turn into the closed position. The actuator device 3 is connected here via a first angular joint 4 to the bodywork 5 of the motor vehicle 1 and via a second angular joint 6 to the tailgate 2. For this reason it may replace the gas springs which are usually provided for opening the tailgate 2 in motor vehicles.

The actuator device 3 comprises two tubular housing parts 7, 8 which can be extended and retracted telescopically.

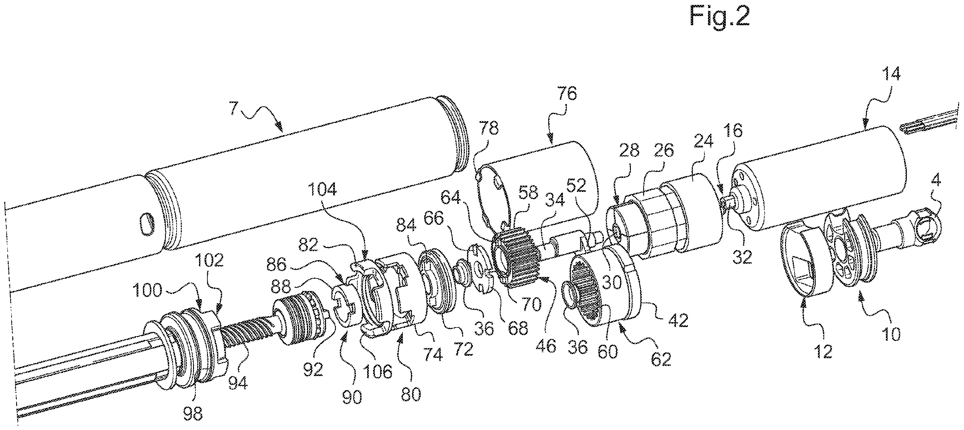

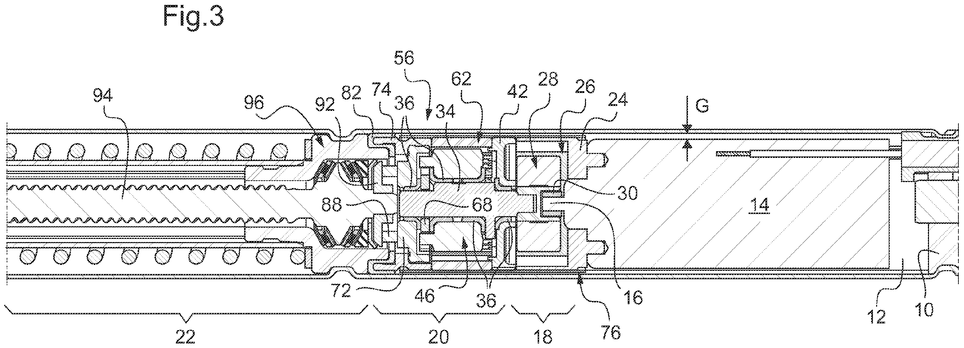

With reference to figures 2 and 3, the actuator device 3 will be described in detail from angular joint 4 in direction of the angular joint 6.

At one end of and within the tubular housing 7, the angular joint 4 is supported by a support disc 10.
Adjacent to the support disc is fixed into the tubular housing 7 a motor damper 12 made of an elastic material, for example made of rubber.

On the other side of the motor damper 12 is fixed with its one end an electrical motor 14.

The electrical motor 14 has an output shaft 16 coupled to a brake device 18.

The brake device 18 is coupled to a gearbox 20 that has an output to drive a spindle drive 22 for extending and retracting telescopically the tubular housing parts 7, 8 and thus to open or close the door or tailgate 2.
More in detail, the brake device 18 is hysteresis brake as described for example in EP1 940 012.

However, other brake devices might be integrated into the actuator device 3.
The brake device comprises essentially a carrier part 24 which is composed, for example, of plastic and which is connected in a rotationally fixed fashion to the housing of the electric motor 14 and in which an annular hysteresis element 26 (for example made of a softmagnetic material or in particular made of oerstite) is attached. A disk 28 of four magnetic alternating poles of permanent magnets, arranged distributed uniformly within the hysteresis element 26, is provided at a predefined radial distance from the hysteresis element 26.
The disk 28 is supported in its center by a double shaft coupling nut 30 having a general form of an H in sectional view (see figure 3). Thus the output shaft 16 of the electrical motor, which may carry an adaptation nut 32 engages into the coupling nut 30 on the one side.

The gearbox 20 of the actuator device 3 comprises a wobble mechanism.
In particular, the wobble mechanism comprises a gearbox excenter shaft 34 rotationally supported by slip bearings 36.
As can be seen in detail, in particular in figures 3 and 4, the gearbox excenter shaft 34 has at one end facing the electrical motor 14 and the brake 18 an engagement portion 38 of smaller diameter engaging into the coupling nut 30 of the brake device 18 and is thus directly driven in rotation by the electrical motor 14.

Adjacent to the engagement portion 38, follows a first supporting portion 40 of larger diameter than the diameter of the engaging portion 38 and hold in a slip bearing 36 that are supported fixed by a rotationally fixed, disc shaped retainer element 42 in contact with the carrier part 24 of the brake 18.

The first supporting portion 40 is adjacent to an excenter shaft portion 44 which rotationally supports via slip bearings 36 an oscillating front wheel 46.

As can be seen in particular on figure 4, the excenter shaft portion 44 has a larger diameter than portions 38 and 40 with a center axis 48 that is eccentric with respect to the rotational axis 50 of the shaft 34 which is concentric and in line with the output shaft 16 of the electrical motor 14.

In order to compensate vibrations due to the eccentric motion of the shaft portion 44 and the oscillating front wheel 46, the excenter shaft portion 44 carries in addition an excenter mass 52. This excenter mass is formed as a circle segment (see figure 2) extending radially on the opposite side of the centre axis 48 of the excenter shaft portion 44 with respect to the rotational axis 50.

Adjacent to the excenter shaft portion 44 is a second supporting portion 54 which rotationally support an Oldham coupling 56 that will be described more in detail later on.

When the excenter shaft 34 rotates, the oscillating front wheel 46 describes therefore an oscillating motion.

The oscillating front wheel 46 has outer teeth 58 that mesh with the inner teeth 60 of a fixed planetary wheel 62.

In order to make a gear reduction, the front wheel 46 has fewer teeth than the planetary wheel 62. As an example, the front wheel has 38 teeth whereas the planetary wheel has 40 teeth. In such a way a reduction report of 19:1 can be achieved.

As can be seen on figure 3, the planetary wheel is fixed in rotation and hold in position in particular by the retainer element 42.

Therefore, the reduction is achieved through the cooperation of the oscillating front wheel 46 and the planetary wheel 62.

In order to drive the spindle drive 22, the output of the oscillating rotation of the front wheel 46 has two diametrical projections 64 for engagement with the Oldham coupling 56.

These projections 64 engage in correspondent first recesses 66 of an Oldham disc 68 rotationally carried by the second supporting portion 54 of the gearbox excenter shaft 34 and retained on this portion 54 by a slip bearing 36.

The Oldham disc 68 has second recesses 70 that are also diametrically opposed, but 90° shifted with respect to the first recesses 66.

These second recesses 70 receive projections of an output shaft disc 72 that are not visible on the figures. This output shaft disc 72 is rotationally supported by the second supporting portion 54 of the gearbox excenter shaft 34 and retained on this portion 54 by a slip bearing 36 on the one side and a gearbox cover housing 74 on the other side.

The side of the gearbox cover housing 74 directed to the electrical motor 14 is engaged in a gear box pipe 76.

This gearbox pipe 76 has retaining projections 78 that engage in correspondent recesses 80 of the gearbox cover housing 74.

Thus, all elements between the carrier part 24 and the gearbox cover housing 74 are assembled and retained together in a very compact way within the gearbox pipe 76.

Furthermore, it is clear that in this way, the gearbox 20 together with the brake device 18 may be easily assembled by orientating the gearbox pipe 76 in a vertical manner where the projections are downwards and then in inserting the gearbox cover housing 74, then the output shaft disc 72, etc. until closing the whole unit forming the gearbox 20 and the brake 18 with the carrier part 24.

Then this gearbox / brake unit 18, 20 can be assembled directly with the electrical motor 14.

In order to reduce noise and vibrations to be transmitted from the gearbox 20 and the electrical motor 14, the gearbox cover housing 74 is recovered with a damper 82 that is interposed between the housing part 7 and the gearbox cover housing 74.

The damper 82 may be of elastic material like rubber or soft plastic.

Thus, through damper 82 on the one side and the motor damper 12, the whole unit formed by the electrical motor 14, the brake device 18 and the gearbox 20 is elastically isolated from the housing part 7 with a little gap G (see figure 3) reducing thus transmission of noise and vibrations.

As can be seen on figure 2, the output shaft disc 72 carries on the side directed to the spindle drive 22 ribs 84 that cooperate with diametrically opposed first slits 86 of an output shaft Oldham disc 88.

On the opposite side, directed to the spindle drive 22, this output Shaft Oldham disc 88 has second slits 90, shifted at 90° with respect to the first slits 86 and cooperating with protrusions 92 fixed in rotation to the spindle 94 of the spindle drive 22.

As can be seen on figures 2 and 3, the end of the spindle 94 facing the gearbox 20 is supported in a bearing unit 96 having a bearing housing 98 having peripheral recesses 100 and protuberances 102 that engage into correspondent recesses 104 and protuberances 106 of damper 82 covering the gearbox cover housing 74.

The spindle 94 of the spindle drive 22 is thus connected to the output shaft of the electric motor 14 through the wobble mechanism of the gearbox 20, and the oscillating wobble movement is retransformed into a simple rotational movement through Oldham couplings 56 and 88.

The spindle 94 carries for example a nut (not represented on the figures) fixed to the housing part 8 in order that the latter can be extended or retracted telescopically depending on the rotation direction.

In functioning, the shaft 16 of the electric motor 14 rotates and drive shaft 34 in motion. This causes the front wheel 46 to mesh with the teeth of the planetary wheel 62.

Therefore the front wheel 46 describes an oscillating movement at a speed corresponding to the rotational speed of the output shaft of the motor 14. In addition, the front wheel 46 rotates around the shaft 34 at a reduced speed which corresponds to the reduction value of the gearbox.

This reduced rotational speed of the front wheel 46 is fed to the Oldham coupling 56 that suppresses the oscillating movement and causes that the output shaft wheel 72 rotates at the reduced rotational speed of the front wheel 46.

As shown above, use of a wobble mechanism comprising shaft 34, front wheel 46, planetary wheel 62, and Oldham coupling 56, as a gearbox 20 allows having a very compact gearbox 20 with reduced number of parts and allowing high efficient reduction.

In addition, as fewer teeth are meshing at the same time together than in gearboxes of known actuator devices with planetary construction, friction noise, and therefore overall noise can be reduced in an important way.

It has also been shown that the assembly of the gearbox 20 is quite easy and may be robotized, contributing to reduce costs furthermore.

## Claims

1. Actuator device for automatically activating the vehicle door (2) of a motor vehicle (1), in particular the tailgate (2), which comprises an electromotive drive (9) and an arrangement of tubular housing parts (7, 8) which can be extended and retracted telescopically by said electromotive drive (9), said electromotive drive comprising an electrical motor (14) and a gearbox (20) driven by the motor (14), **characterized in that**, the gearbox (20) comprises a wobble mechanism (34, 46, 62, 56,
the said wobble mechanism (34, 46, 62, 56) comprises an excenter shaft (34) rotationally driven by the electrical motor (14) and supporting an oscillating front wheel (46) having outer teeth (58) and a fixed planetary wheel (62) having inner teeth (60) meshing with the outer teeth (58) of the front wheel (46), the front wheel (46) having less teeth than the planetary wheel (62)
wherein the front wheel (46) is coupled to an output shaft disc (72) via an Oldham coupling (56),
and wherein the excenter shaft carries in addition an excenter mass (52) for compensation of vibrations generated by the oscillating front wheel (46).

2. Actuator device according to claim 1, where the Oldham coupling (56) comprises an Oldham disc (68) having first diametrically opposed recesses (66) and second diametrically opposed second recesses (70), shifted by 90° with respect to said first recesses (66), said first recesses (66) engage with two diametrical projections (64) of said front wheel (46) and said second recesses (66) engage with projections carried by said output shaft disc (72).

3. Actuator device according to claim 2, where said excenter shaft (34) supports rotationally the front wheel (46), the Oldham disc (68) and the output shaft disc (72).

4. Actuator device according to any of claims 1 to 3, where the gearbox (20) comprises a gear box pipe (76) in which the planetary wheel (62) is fixed.

5. Actuator device according to any of claims 1 to 4, further comprising a brake device (18) located between the electrical motor (14) and the gearbox (20).

6. Actuator device according to claim 5. where the brake device (18) is a permanent-magnet-excited hysteresis brake.

7. Actuator device according to any of claims 5 or 6, where the gearbox (20) and the brake device (18) are assembled in said gear box pipe (76).

## Patentansprüche

1. Aktuatorvorrichtung zum automatischen Betätigen der Fahrzeugtür (2) eines Motorfahrzeugs (1), insbesondere der Heckklappe (2), die einen elektromotorischen Antrieb (9) und eine Anordnung von rohrförmigen Gehäuseteilen (7, 8) umfasst, die durch den elektromotorischen Antrieb (9) teleskopisch aus- und eingefahren werden können, wobei der elektromotorische Antrieb einen Elektromotor (14) und ein Getriebe (20) umfasst, das durch den Motor (14) angetrieben wird, **dadurch gekennzeichnet, dass** das Getriebe (20) einen Taumelmechanismus (34, 46, 62, 56) umfasst, wobei der Taumelmechanismus (34, 46, 62, 56) eine Exzenterwelle (34) umfasst, die durch den Elektromotor (14) drehend angetrieben wird, und ein oszillierendes Vorderrad (46), das äußere Zähne (58) aufweist, und ein feststehendes Planetenrad (62), das innere Zähne (60) aufweist, trägt, die in die äußeren Zähne (58) des Vorderrades (46) eingreifen, wobei das Vorderrad (46) weniger Zähne als das Planetenrad (62) aufweist,
wobei das Vorderrad (46) über eine Oldham-Kupplung (56) an eine Ausgangswellenscheibe (72) gekoppelt ist,
und wobei die Exzenterwelle zusätzlich eine Exzentermasse (52) zum Ausgleichen von Schwingungen trägt, die durch das oszillierende Vorderrad (46) generiert werden.

2. Aktuatorvorrichtung nach Anspruch 1, wobei die Oldham-Kupplung (56) eine Oldham-Scheibe (68) umfasst, die erste diametrisch entgegengesetzte Ausnehmungen (66) und zweite diametrisch entgegengesetzte zweite Ausnehmungen (70) aufweist, die in Bezug zu den ersten Ausnehmungen (66) um 90° versetzt sind, wobei die ersten Ausnehmungen (66) in zwei diametrische Vorsprünge (64) des Vorderrades (46) eingreifen, und die zweiten Ausnehmungen (66) in Vorsprünge eingreifen, die durch die Ausgangswellenscheibe (72) getragen werden.

3. Aktuatorvorrichtung nach Anspruch 2, wobei die Exzenterwelle (34) das Vorderrad (46), die Oldham-Scheibe (68) und die Ausgangswellenscheibe (72) drehend trägt.

4. Aktuatorvorrichtung nach einem der Ansprüche 1 bis 3, wobei das Getriebe (20) ein Getrieberohr (76) umfasst, in dem das Planetenrad (62) fixiert ist.

5. Aktuatorvorrichtung nach einem der Ansprüche 1 bis 4, weiter eine Bremsvorrichtung (18) umfassend, die sich zwischen dem Elektromotor (14) und dem Getriebe (20) befindet.

6. Aktuatorvorrichtung nach Anspruch 5, wobei die Bremsvorrichtung (18) eine durch einen Dauermagneten angeregte Hysterese-Bremse ist.

7. Aktuatorvorrichtung nach einem der Ansprüche 5 oder 6, wobei das Getriebe (20) und die Bremsvorrichtung (18) in dem Getrieberohr (76) zusammengesetzt sind.

## Revendications

1. Dispositif actionneur pour activer automatiquement la portière de véhicule (2) d'un véhicule automobile (1), en particulier le hayon (2), qui comprend un entraînement électromoteur (9) et un agencement de parties de boîtier tubulaires (7, 8) qui peut être étendu et rétracté de manière télescopique par ledit entraînement électromoteur (9), ledit entraînement électromoteur comprenant un moteur électrique (14) et une boîte de vitesses (20) entraînée par le moteur (14), **caractérisé en ce que**, la boîte de vitesses (20) comprend un mécanisme oscillant (34, 46, 62, 56),
ledit mécanisme oscillant (34, 46, 62, 56) comprend un arbre excentrique (34) entraîné en rotation par le moteur électrique (14) et supportant une roue avant oscillante (46) ayant des dents externes (58) et une roue planétaire fixe (62) ayant des dents internes (60) s'engrenant avec les dents externes (58) de la roue avant (46), la roue avant (46) ayant moins de dents que la roue planétaire (62)
dans lequel la roue avant (46) est couplée à un disque d'arbre de sortie (72) par l'intermédiaire d'un accouplement Oldham (56),
et dans lequel l'arbre excentrique porte en outre une masse excentrique (52) pour la compensation des vibrations générées par la roue avant oscillante (46).

2. Dispositif actionneur selon la revendication 1, dans lequel l'accouplement Oldham (56) comprend un disque Oldham (68) ayant des premiers évidements (66) diamétralement opposés et des deuxièmes évidements (70) diamétralement opposés, décalés de 90° par rapport auxdits premiers évidements (66), lesdits premiers évidements (66) s'engagent avec deux saillies diamétrales (64) de ladite roue avant (46) et lesdits deuxièmes évidements (66) s'engagent avec des saillies portées par ledit disque d'arbre de sortie (72).

3. Dispositif actionneur selon la revendication 2, dans lequel ledit arbre excentrique (34) supporte en rotation la roue avant (46), le disque Oldham (68) et le disque d'arbre de sortie (72).

4. Dispositif actionneur selon l'une des revendications 1 à 3, où la boîte de vitesses (20) comprend un tuyau de boîte de vitesses (76) dans lequel est fixée la roue planétaire (62).

5. Dispositif actionneur selon l'une des revendications 1 à 4, comprenant en outre un dispositif de freinage (18) situé entre le moteur électrique (14) et la boîte de vitesses (20).

6. Dispositif actionneur selon la revendication 5, où le dispositif de freinage (18) est un frein à hystérésis excité par aimant permanent.

7. Dispositif actionneur selon l'une des revendications 5 et 6, où la boîte de vitesses (20) et le dispositif de freinage (18) sont assemblés dans ledit tuyau de boîte de vitesses (76).
